# EUROPEAN PATENT SPECIFICATION

(11) **EP 3 819 275 B1**
(45) Date of publication and mention of the grant of the patent: **03.04.2024**
(21) Application number: 18925334.7
(22) Date of filing: 23.07.2018
(51) Int. Cl.: C04B 35/12, C04B 35/626, C04B 35/63, C04B 7/06, F27D 1/00, C21C 5/44, C21B 7/06

(54) **CHROMIA-BASED BRICK**
ZIEGELSTEIN AUF CHROMBASIS
BRIQUE À BASE D'OXYDE DE CHROME

(30) Priority: 02.07.2018 JP 2018125816
(43) Date of publication of application: 12.05.2021
(73) Proprietor: TYK Corporation, Tokyo 108-0075 (JP)
(72) Inventor: IKEUCHI, Yasushi, Tajimi-shi, Gifu 507-8607 (JP); NAKATANI, Tomohiko, Tajimi-shi, Gifu 507-8607 (JP)
(74) Representative: Mewburn Ellis LLP
(86) International application number: PCT/JP2018/027489
(87) International publication number: WO 2020/008653

(56) References cited:
- CN-A- 101 935 229
- CN-A- 104 478 442
- JP-A- S5 673 673
- JP-A- 2012 524 012
- JP-A- 2016 503 372
- US-A- 4 125 409
- US-A1- 2008 160 279
- US-A1- 2014 013 807
- US-B2- 7 396 789

## Description

### BACKGROUND OF THE INVENTION

### FIELD OF THE INVENTION

The present invention relates to a chromia-based brick applied suitably for the purposes of conforming to high-corrosion resistance requirements, and a chromia-based brick applicable suitably to a region, in which the corrosion resistance is requested, in the waste-melting furnaces, pig-iron equipment, gasification furnaces for organic substances, and glass-melting furnaces, in particular.

### DESCRIPTION OF THE BACKGROUND ART

An alumina-based brick has conventionally been used as a lining brick in *e.g.* incinerators. In recent years, a demand for the melting treatment of e.g. incinerated ash has increased for further volume reduction. On demand of high treatment-temperature melting furnaces for their corrosion resistance higher than that of the previous ones, alumina-chromia based bricks, i.e., chromia-containing bricks, have been used.

The corrosion resistance of currently used alumina-chromia based bricks has, however, been not necessarily at a satisfiable level, and for this reason, a brick of further higher corrosion resistance has been demanded.

It is considered that enhancing the chromia content is effective at improving the corrosion resistance; however, the heat spalling resistance decreases with increase in chromia content. In other words, it has not been possible to maintain both the corrosion resistance and the heat spalling resistance at sufficient levels.

For this reason, various methods have been so studied as to improve the heat spalling resistance of alumina-chromia based bricks. Patent Document 1, e.g., discloses a chromia-containing brick of high-heat spalling resistance characterized by including mullite in coarse grain and/or medium-sized grain portions therein. It is described that, when Al₂O₃·Cr₂O₃ is formed in the reaction occurring between mullite grains and chromia, a number of fine openings of gaps generated within the mullite grains emerge on the surface of such grains, and the fine openings result effectively in the reduced elasticity of the brick, and also result effectively in the thermal-stress relaxation in the hot processing, thereby to improve the heat spalling resistance of the brick.

### (Prior Art Documents)

### (Patent Documents)

Patent Document 1: Japanese Patent Application Laid-Open Publication No. 2000-327407
Patent Document 2 : US 2008/160279
Patent Document 3 : US 2014/013807
Patent Document 4 : CN 101/935 229
Patent Document 5 : US 7 396 789
Patent Document 6 : US 4 125 409
Patent Document 7 : CN 104 478 442
Patent documents 2-7 generally relate to chromia-based products or materials for use in high temperature environments, for example furnaces.

### (Problems to be solved)

Under the above-described techniques, the heat spalling resistance has been improved by addition of mullite; however, a chromia content results in 20 to 70 wt%, and it could not be said that an alumina-chromia based brick of such a chromia content has the corrosion resistance sufficient to a level requested in the apparatus such as melting furnaces and gasification furnaces.

An objective of the present invention is, therefore, to provide a chromia-based brick that excels in corrosion resistance and heat spalling resistance. More specifically, the objective of the present invention is to provide the chromia-based brick applicable suitably to a region, in which the corrosion resistance is requested, in the waste-melting furnaces, pig-iron equipment, gasification furnaces for organic substances, and glass-melting furnaces, in particular.

### SUMMARY OF THE INVENTION

### (Means for Solving Problems)

The present inventors have studied so diligently as to solve the above-described technical problems, and found a chromia-based brick of improved corrosion resistance as well as heat spalling resistance.

In the first aspect of the present invention, there is used technical means that the chromia-based brick as the first aspect of the present invention comprises: 75 to 95 mass% of Cr₂O₃; 0.5 to 14 mass% of ZrO₂; 1.5 to 3.0 mass% of P₂O₅ derived from phosphate added as raw material; 8 or lower mass% of Al₂O₃; and a sintering aid component and unavoidable components.

In the second aspect of the present invention, there is used technical means that the phosphate, in the chromia-based brick as the first aspect of the present invention, includes aluminum phosphate.

In the third aspect of the present invention, there is used technical means that one or two selected from the group consisting of: zirconia-mullite having a grain diameter of 0.1 to 3 mm; and baddeleyite having a grain diameter of less than or equal to 0.074 mm, in the chromia-based brick as the first or second aspect of the present invention, are used as the raw material of ZrO₂.

In the fourth aspect of the present invention, there is used technical means that a porosity is 10 to 20% in the chromia-based brick as any one of the first to third aspects of the present invention.

In the fifth aspect of the present invention, there is used technical means that the chromia-based brick as any one of the first to fourth aspects of the present invention is used in a region, in which corrosion resistance is requested, in a waste-melting furnace, pig-iron equipment, gasification furnace for organic substance, and glass-melting furnace.

### (Advantageous Effects of the Invention)

According to the present invention, it is possible to obtain a chromia-based brick, of which the chromia content is enhanced to such an extent that the corrosion resistance could increase while the heat spalling resistance could be maintained at a good level, and as a result, the chromia-based brick could be made excel in corrosion resistance as well as heat spalling resistance.

### DESCRIPTIONS OF EMBODIMENTS OF THE INVENTION

The present inventors have studied so diligently as to solve the above-described technical problems, and found a chromia-based brick of improved corrosion resistance as well as heat spalling resistance. The technical idea for material design will be described hereinafter.

The enhancement of chromia content is effective at improving the corrosion resistance. Upon enhancement of chromia in relative amount to 70 or higher mass%, however, alumina responsible for the emergence of intensity decreases in relative amount, and as a result, the intensity decreases. For improving such reduced intensity, the treatment of high-temperature burning at 1650°C or higher is carried out, and thereby the sintering of chromia grains proceeds. As a result, the heat spalling resistance decreases.

Against the above backdrop, the brick structure is formed, by chromia grains, in such a manner that phosphate is dispersed among the chromia grains and the grains are bound to one another via a network formed through a polymerization reaction of the phosphate caused to occur by the heat treatment. As a result, a sufficient level of intensity could be made emerge by the treatment of burning at 1200 to 1640°C. Further, as a result of the reduction of the sintering of chromia grains, the heat spalling resistance could be improved in comparison with that of a brick manufactured by the treatment of high-temperature burning.

Further, zirconia is added to introduce micro cracks, which could result in the improvement of the heat spalling resistance.

As a result, it is possible to produce the chromia-based brick of high corrosion resistance as well as heat spalling resistance.

The composition of chromia-based bricks as embodiments according to the present invention will be described hereinafter.

The chromia-based brick as an embodiment according to the present invention includes: 75 to 95 mass% of Cr₂O₃; 0.5 to 14 mass% of ZrO₂; 1.5 to 3.0 mass% of P₂O₅ derived from phosphate added as raw material; 8 or lower mass% of Al₂O₃; and a sintering aid component and unavoidable components be included in the chromia-based brick.

It is requested, in order to improve the corrosion resistance, that the chromia content be enhanced, and by such a request, 75 to 95 mass% is adopted as a relative amount of Cr₂O₃ in the chromia-based brick as an embodiment according to the present invention. The lower limit is so provided that, when a relative amount of Cr₂O₃ is lower than 75 mass%, a level of corrosion resistance is insufficient for applying the brick to a region having a requested level of corrosion resistance in waste-melting furnaces, pig-iron equipment, gasification furnaces for organic substances, and glass-melting furnaces. The upper limit, 95 mass%, is provided for a room for additive components and unavoidable impurity components.

For chromia-based raw material, there may be used various raw materials such as: chromia bat with an angle of repose relevant to coarse grains; electro-fused chromia; electro-fused chromia-alumina; chromia-alumina bat with an angle of repose relevant to coarse grains; powdered chromium oxide or oxide having chromia as a main component (containing, e.g., alumina, magnesia, iron oxide, titania, silica). It is preferred, from the viewpoint of corrosion resistance, that electro-fused raw materials, which are minute and have a few impurities, be used.

The grain diameter of chromia-based raw material will be described herein. In an embodiment according to the present invention, the grain having a diameter more than or equal to 1 mm as well as less than 5 mm is defined as "coarse grain"; the grain having a diameter more than or equal to 0.074 mm as well as less than 1 mm is defined as "medium grain"; and the grain having a diameter less than 0.074 mm is defined as "fine grain." The grains are sorted in terms of a grain size through the use of the test sieves provided by the Japanese Industrial Standards JIS Z 8801-1.

A grain size ratio of chromia-based raw materials in a mixture could be adjusted properly to a ratio among: a relative amount within a range of 30 to 50% coarse grains; a relative amount within a range of 0 to 40% medium grains; and a relative amount within a range of 10 to 40% fine grains. In order to obtain a porosity falling within a suitable range, it is preferred that the grain size ratio be adjusted to a ratio among: a relative amount of approximately 40% coarse grains; a relative amount within a range of 10 to 30% medium grains; and a relative amount within a range of 20 to 30% fine grains.

In order to improve the heat spalling resistance while causing the intensity to emerge, the brick is formed in such a manner that mainly chromia grains are bound to one another via network formed through a polymerization of phosphate caused by the heat treatment.

The phosphate is added in the form of an aqueous solution or powder in a step of manufacturing the chromia-based brick in such a manner that a relative amount of P₂O₅ in the brick falls within a predetermined range.

It is preferred that the phosphate be aluminum phosphate. This is because the aluminum phosphate does not have any risk of causing a reaction to occur between a component therein and a component in the brick, e.g., an alumina component, and lowering a melting point of the brick, which results in adversely affecting the corrosion resistance.

The aluminum phosphate is polymerized at 1000°C or higher and the polymerized phosphate expressed as AlPO₄ is bound to chromia, and as a result, it could cause the intensity to emerge at a sufficient level in the brick by the treatment of burning at 1200 to 1640°C. As such, the burning temperature could be lowered, and therefore, the sintering of chromia and components such as alumina and silica in the brick could be suppressed, and as a result, the heat spalling resistance could be improved in comparison with that of a brick manufactured by the treatment of high-temperature burning.

The binding, in which phosphate is involved, is defined quantitatively through a relative amount of P₂O₅ determined by a fluorescent X-ray analysis as a representative value. When P₂O₅ is relatively low in amount indicating AlPO₄ involved in the binding as being relatively low in amount, the intensity of the brick could not be caused to emerge at a sufficient level. For this reason, the heat spalling resistance decreases. On the other hand, when P₂O₅ is relatively high in amount indicating phosphate involved in the binding as being relatively high in amount, the heat spalling resistance of the brick could be improved; however, due to the fact that phosphate is raw material of a melting point lower than that of chromia, the corrosion resistance of the brick decreases. As a result, it is preferred that a relative amount of P₂O₅ be set within a range of 1.5 to 3.0 mass% when a relative amount of Cr₂O₃ is within a range of 75 to 95 mass%.

When zirconia is contained, micro cracks could be introduced as a result of the expansion and contraction of the brick at the time of being burned. Therefore, even when cracks are macroscopically generated by thermal shock, any further elongation thereof could be dispersed to be suppressed by micro cracks, and thereby, the heat spalling resistance could be further improved.

In order to effectively introduce the micro cracks, it is preferred that a relative amount of ZrO₂ be set within a range of 0.5 to 14 mass% when a relative amount of Cr₂O₃ is within a range of 75 to 95 mass%. For a relative amount of ZrO₂, the lower limit is provided by requirements for introducing sufficient amount of micro cracks, and the upper limit is provided through a relationship with Cr₂O₃ and other components.

As zirconia-based raw material used in an embodiment according to the present invention, one or two selected from the group consisting of: zirconia-mullite; and baddeleyite, may be used.

When zirconia-mullite is used, because of its thermal expansivity lower than that of baddeleyite due to the volume stability of mullite thereby to introduce micro cracks into the brick, the heat spalling resistance could easily be obtained. It is to be noted that, if zirconia-mullite is used as fine grains, the sintering is promoted in the brick, which results in difficulty in the improvement of the heat spalling resistance to a sufficient level, and also results in tendency of the corrosion resistance to decrease.

On the other hand, if a grain diameter of zirconia-mullite is more than or equal to 3 mm, the corrosion resistance and intensity of the brick tend to decrease, which is not preferrable. As a consequence, it is preferred that the zirconia-mullite be used as coarse and medium grains, whose grain diameter is more than or equal to 0.1 mm as well as less than 3 mm.

Baddeleyite is of high corrosion resistance while high thermal expansivity, and for this reason, its effect of improving the heat spalling resistance is lower in comparison with that of zirconia-mullite. Further, when baddeleyite is used in the form of coarse grains, the introduced micro cracks is larger in size due to its higher thermal expansivity, the intensity of the brick decreases and its breakage is promoted. It is preferred, therefore, that fine grains be used for baddeleyite. Because of the previous corrosion of matrices in general, it is preferred that baddeleyite be reduced in relative amount, and instead, zirconia-mullite be used.

It is also considered that zircon may be used as zirconia-based raw material; however, zircon has more amount of SiO₂ components, and for this reason, there is a risk of reducing the heat spalling resistance as a result of the sintering. Further, there is difficulty in the introduction of micro cracks, and for this reason, it is requested that a relative amount of the added zircon be enhanced for introducing effective amount of micro cracks. There is a risk that such enhancement will give rise to decrease of the corrosion resistance, and as a consequence, zircon is not used.

Alumina includes the following relative amount of a component derived mainly from: electro-fused chromia-alumina; chromia-alumina bat with an angle of repose relevant to coarse grains; an oxide having chromia as a main component (containing, e.g., alumina, magnesia, iron oxide, titania, silica); zirconia-mullite; and aluminum phosphate. In an embodiment according to the present invention, grains are bound to one another mainly through phosphate, and therefore, only the upper limit is defined for a relative amount of alumina. For a relative amount of Al₂O₃, it is preferred that the upper limit be set to be 8 or lower mass% when a relative amount of Cr₂O₃ is within a range of 75 to 95 mass%. It is to be noted that alumina fine grains may be added as a sintering aid agent for improving the sintering properties.

It is preferred that a porosity of a chromia-based brick be within a range of 10 to 20% on the grounds that: when the porosity is less than 10%, the chromia-based brick is minute and thereby the heat spalling resistance thereof decreases; and when the porosity is more than 20%, both the intensity and the corrosion resistance thereof decrease.

The porosity is susceptible to a relative amount of the added phosphate and baddeleyite. When the added phosphate is relatively low in amount, the binding of the brick is insufficient and the porosity increases even for the above-described grain size ratio of chromia grains. When the added baddeleyite is relatively high in amount, its thermal expansivity is relatively high at the time of burning the brick, and as a result, such a brick after having been burned is expanded and thereby the porosity increases.

On the other hand, the porosity is caused to decrease by the progress of the sintering of chromia grains. In the chromia-based brick as an embodiment according to the present invention, the grain size ratio of chromia grains has been so studied as to suppress the sintering of chromia grains while also maintain the porosity within a range of 10 to 20%. In order to improve a filling factor of raw materials at the time of forming while obtain a porosity falling within a suitable range, it is preferred that the grain size ratio of chromia grains be adjusted to a ratio among: a relative amount of approximately 40% coarse grains; a relative amount within a range of 10 to 30% medium grains; and a relative amount within a range of 20 to 30% fine grains.

A method for manufacturing a chromia-based brick as an embodiment according to the present invention will be described hereinafter. Raw materials and a sintering aid are weighed respectively and thereafter mixed together, and a resultant one obtained as a result of kneading the mixture is formed into a predetermined form. Such a formed body is burned at a burning temperature of 1200 to 1640°C in the atmosphere thereby to be a chromia-based brick. Under the actual usage conditions, an operation temperature is approximately 1400°C, and it is therefore preferred that the treatment of burning be carried out at 1400 to 1640°C.

The chromia-based brick as an embodiment according to the present invention is applicable suitably for the purpose of conforming to the requirements of high corrosion resistance and heat spalling resistance. Main intended use will be described hereinafter.

The chromia-based brick as an embodiment according to the present invention is applicable suitably for a waste-melting furnace operated in an oxidization atmosphere. Such a waste-melting furnace is a furnace to be heated to a high temperature of approximately 1200 to 1800°C for the treatment of waste. Residue is left as molten slag, which reacts with a brick so as to give rise to the corrosion of the brick. For this reason, a brick having a high chromia content is applicable suitably for a high-temperature region to be brought into contact with molten slag not only in view of heat spalling resistance but also in view of high corrosion resistance. It is to be noted that chromia undergoes the reduction reaction in a reduction atmosphere, and is therefore applicable to a region of a reduction atmosphere in, *e.g.,* a shaft-furnace type gasification-melting furnace where cokes and waste are injected and treated.

The chromia-based brick as an embodiment according to the present invention is applicable suitably for pig-iron equipment. The pig-iron equipment has a furnace for manufacturing pig iron by blowing oxygen through iron ore and coal so as to allow a reaction to occur therebetween, and an operation temperature is approximately 1500°C. The corrosion resistance to slag, which is developed during the generation of pig iron, is important, and therefore, the chromia-based brick as an embodiment according to the present invention is applicable suitably in, *e.g.,* a slag line region.

The chromia-based brick as an embodiment according to the present invention is applicable suitably for gasification-cracking furnaces for organic substances. The gasification-cracking furnace for organic substances is a furnace for obtaining product gases by decomposing raw materials derived from coal and petroleum at a temperature of 700°C or higher. It is requested that the chromia content in the brick be enhanced to improve the corrosion resistance of the brick, under circumstances that raw materials including a large amount of residue are used inside the furnace and the corrosion of the brick is caused by CaO and SiO₂ included as the residue other than organic substances or other components inside the furnace, or under further severe operating conditions that a temperature of 1200°C or higher is required inside the furnace. As a result, the chromia-based brick as an embodiment according to the present invention is applicable suitably as a lining throughout the furnace.

The chromia-based brick as an embodiment according to the present invention is applicable suitably for glass-melting furnaces. The glass-melting furnace is a furnace for melting raw materials such as silica sand, soda ash, and lime at a high temperature, and the temperature is 900°C or higher during the melting of the raw materials. The chromia-based brick as an embodiment according to the present invention could prevent a brick component such as alumina from dissolving in molten glass, and therefore is applicable for a region to be brought into contact with the molten glass. Further, the chromia-based brick as an embodiment according to the present invention has high corrosion resistance, and therefore is applicable suitably in, *e.g.,* vitrification equipment for waste including highly radioactive substances.

The chromia-based brick as an embodiment according to the present invention is of high stability for objects having a basicity of 1.0 (= CaO/SiO₂) or less, *i.e.,* low basicity, which could not be handled by any magnesia-chromia bricks. Slag having a relatively high ratio of SiO₂ undergoes a reaction with the brick so as to cause chromia to dissolve in the slag, which results in increase of the melting point and increase of the viscosity of the slag. As such, the surface of the brick is coated with slag to form a protective layer, and as a result, the brick is improved in durability.

### (Effect of Embodiment)

According to a chromia-based brick as an embodiment of the present invention, it is possible to obtain the above-described chromia-based brick, of which chromia content is enhanced to such an extent that the corrosion resistance could increase while the heat spalling resistance could be maintained at a good level, and as a result, the brick could be made excel in corrosion resistance as well as heat spalling resistance. Such a brick is applicable suitably in regions, in which the corrosion resistance is requested, in the waste-melting furnaces, pig-iron equipment, gasification-cracking furnaces for organic substances, and glass-melting furnaces.

### (EXAMPLES)

Examples according to the present invention will be described hereinafter. It is to be noted that the present invention shall not be limited to such examples. TABLES 1 to 4 show mixing ratios among raw materials, grain size ratios of chromia raw materials in the mixing ratios, relative amounts along with porosity obtained by analysis, a result of the heat-spalling resistance test, and a result of the rotary erosion test in examples of the chromia-containing bricks according to the present invention, and REFERENCES 1 to 5 for comparison. As REFERENCE 1, the brick with alumina content of 22 mass% was prepared without the use of aluminum phosphate through the burning at 1700°C. In REFERENCES 2 to 5, their respective bricks were prepared through the burning at 1500°C, which is the same as that for the preparation of the EXAMPLES; however, the relative amounts of ZrO₂, P₂O₅, and Al₂O₃, respectively, were out of the corresponding ranges of the EXAMPLES. The examples marked by * are additional reference examples which do not fall within the scope of the claims.

**TABLE 1**

| | | | | EXAMPLE | | | | | | | REFERENCE |
|---|---|---|---|---|---|---|---|---|---|---|---|
| Raw material | | | Grains | 1* | 2 | 3 | 4 | 5 | 6 | 7 | 1 |
| Chromia | Chromia bat | | Coarse | | | | | | | 40 | 40 |
| | | | Medium | | | | | | | 20 | 25 |
| | Electro-fused chromia | | Coarse | 40 | 40 | 40 | 40 | 40 | 40 | | |
| | | | Medium | 7.5 | 10 | 15 | 20 | 20 | 29 | | |
| | Chromium ore | | Medium | 2.5 | 5 | 5 | 5 | 5 | | 5 | |
| | Chromium oxide | | Fine | 21 | 21 | 22 | 22 | 26 | 26 | 22 | 10 |
| Zirconia-based | Zirconia-mullite | | Coarse | 10 | 6 | 5 | | 3 | 1.5 | | |
| | | | Medium | 10 | 6 | 5 | 5 | 3 | | 5 | 5 |
| | Baddeleyite | | Fine | 7 | 9 | 5 | 5 | | | 5 | |
| Alumina | Calcined alumina | | Fine | | | | | | 0.5 | | 20 |
| Phosphate | Aluminum phosphate | | Powder | 2 | 3 | 3 | 3 | 3 | 3 | 3 | |
| Grain size ratio of chromia raw material (%) | | | Coarse | 40 | 40 | 40 | 40 | 40 | 40 | 40 | 40 |
| | | | Medium | 10 | 15 | 20 | 25 | 25 | 29 | 25 | 25 |
| | | | Fine | 21 | 21 | 22 | 22 | 26 | 26 | 22 | 10 |
| Apparent porosity (%) | | | | 19.6 | 16.1 | 15.3 | 14.8 | 12.8 | 14.1 | 16.8 | 9.5 |
| Relative amount in brick (mass%) | | | Cr₂O₃ | 70 | 75 | 81 | 86 | 90 | 95 | 86 | 75 |
| | | | ZrO₂ | 13.0 | 12.6 | 8.0 | 6.5 | 1.8 | 0.5 | 6.5 | 2.0 |
| | | | Al₂O₃ | 9.6 | 6.4 | 5.5 | 3.3 | 3.7 | 1.9 | 3.3 | 22 |
| | | | P₂O₅ | 1.5 | 2.3 | 2.3 | 2.3 | 2.3 | 2.3 | 2.3 | 0 |
| Heat-spalling resistance test result | | Heat spalling resistance | | ○ | Ⓞ | Ⓞ | Δ | Δ | Δ | Δ | × |
| Rotary-erosion test result | | Corrosion index | | Δ | ○ | ○ | ○ | ○ | ○ | ○ | Δ |

**TABLE 2**

| | | | | EXAMPLE | | | REFERENCE | |
|---|---|---|---|---|---|---|---|---|
| Raw material | | | Grains | 8* | 9 | 10* | 2 | 3 |
| Chromia | Chromia bat | | Coarse | | | | | |
| | | | Medium | | | | | |
| | Electro-fused chromia | | Coarse | 40 | 40 | 40 | 40 | 40 |
| | | | Medium | 20 | 20 | 20 | 20 | 20 |
| | Chromium ore | | Medium | 5 | 5 | 5 | 5 | 5 |
| | Chromium oxide | | Fine | 26 | 26 | 26 | 26 | 26 |
| Zirconia-based | Zirconia-mullite | | Coarse | 3 | 3 | 2 | 3 | 1.5 |
| | | | Medium | 3 | 3 | 2 | 3 | 1.5 |
| | Baddeleyite | | Fine | | | | | |
| Alumina | Calcined alumina | | Fine | 2.5 | 1 | | 3 | |
| Phosphate | Aluminum phosphate | | Powder | 0.5 | 2 | 5 | 0 | 6 |
| Grain size ratio of chromia raw material (%) | | | Coarse | 40 | 40 | 40 | 40 | 40 |
| | | | Medium | 25 | 25 | 25 | 25 | 25 |
| | | | Fine | 26 | 26 | 26 | 26 | 26 |
| Apparent porosity (%) | | | | 18.8 | 15.7 | 15.3 | 20.6 | 15.1 |
| Relative amount in brick (mass%) | | | Cr₂O₃ | 90 | 90 | 90 | 90 | 90 |
| | | | ZrO₂ | 1.8 | 1.8 | 1.2 | 1.8 | 0.9 |
| | | | Al₂O₃ | 5.6 | 4.5 | 3.3 | 6.0 | 3.1 |
| | | | P₂O₅ | 0.4 | 1.5 | 3.8 | 0 | 4.5 |
| Heat-spalling resistance test result | | Heat spalling resistance | | Δ | Δ | Δ | × | Δ |
| Rotary-erosion test result | | Corrosion index | | ○ | Ⓞ | ○ | Δ | × |

**TABLE 3**

| | | | | EXAMPLE | | | | | | REFERENCE | |
|---|---|---|---|---|---|---|---|---|---|---|---|
| Raw material | | | Grains | 11* | 12 | 13 | 14 | 15 | 16* | 4 | 5 |
| Chromia | Chromia bat | | Coarse | | | | | | | | |
| | | | Medium | | | | | | | | |
| | Electro-fused chromia | | Coarse | 40 | 40 | 40 | 40 | 40 | 40 | 40 | 40 |
| | | | Medium | 25 | 25 | 25 | 25 | 22 | 21 | 25 | 20 |
| | Chromium ore | | Medium | | | | | | | | |
| | Chromium oxide | | Fine | 22 | 22 | 22 | 22 | 22 | 22 | 22 | 22 |
| Zirconia-based | Zirconia-mullite | | Coarse | 1.5 | 5 | | | | | | |
| | | | Medium | | 5 | 5 | | | | | |
| | Baddeleyite | | Fine | | | 5 | 10 | 14 | 15 | | 16 |
| Alumina | Calcined alumina | | Fine | 8.5 | | | | | | 10 | |
| Phosphate | Aluminum phosphate | | Powder | 3 | 3 | 3 | 3 | 2 | 2 | 3 | 2 |
| Grain size ratio of chromia raw material (%) | | | Coarse | 40 | 40 | 40 | 40 | 40 | 40 | 40 | 40 |
| | | | Medium | 25 | 25 | 25 | 25 | 22 | 21 | 25 | 20 |
| | | | Fine | 22 | 22 | 22 | 22 | 22 | 22 | 22 | 22 |
| Apparent porosity (%) | | | | 13.9 | 13.5 | 15.5 | 16.9 | 17.6 | 19.4 | 15.2 | 23.5 |
| Relative amount in brick (mass%) | | | Cr₂O₃ | 87 | 87 | 87 | 87 | 84 | 83 | 87 | 82 |
| | | | ZrO₂ | 0.5 | 3.0 | 6.5 | 10.0 | 14.0 | 15.0 | 0 | 16.0 |
| | | | Al₂O₃ | 9.9 | 5.3 | 3.0 | 0.8 | 0.5 | 0.5 | 10.8 | 0.5 |
| | | | P₂O₅ | 2.3 | 2.3 | 2.3 | 2.3 | 1.5 | 1.5 | 2.3 | 1.5 |
| Heat-spalling resistance test result | | Heat spalling resistance | | Δ | Δ | Δ | Δ | Δ | Δ | × | Δ |
| Rotary-erosion test result | | Corrosion index | | ○ | Ⓞ | Ⓞ | ○ | ○ | Δ | ○ | × |

**TABLE 4**

| | | | | EXAMPLE | | | |
|---|---|---|---|---|---|---|---|
| Raw material | | | Grains | 17* | 18* | 19* | 20* |
| Chromia | Chromia bat | | Coarse | | | | |
| | | | Medium | | | | |
| | Electro-fused chromia | | Coarse | 40 | 40 | 40 | 40 |
| | | | Medium | 25 | 25 | 29 | 30 |
| | Chromium ore | | Medium | | | | |
| | Chromium oxide | | Fine | 23 | 26 | 26 | 28 |
| Zirconia-based | Zirconia-mullite | | Coarse | | | | |
| | | | Medium | | | | |
| | Baddeleyite | | Fine | | | | |
| Alumina | Calcined alumina | | Fine | 9 | 6 | 2 | 0 |
| Phosphate | Aluminum phosphate | | Powder | 3 | 3 | 3 | 2 |
| Grain size ratio of chromia raw material (%) | | | Coarse | 40 | 40 | 40 | 40 |
| | | | Medium | 25 | 25 | 29 | 30 |
| | | | Fine | 23 | 26 | 26 | 28 |
| Apparent porosity (%) | | | | 13.3 | 13.8 | 14.5 | 15.2 |
| Relative amount in brick (mass%) | | | Cr₂O₃ | 88 | 91 | 95 | 98 |
| | | | ZrO₂ | 0 | 0 | 0 | 0 |
| | | | Al₂O₃ | 9.8 | 6.8 | 2.8 | 0.5 |
| | | | P₂O₅ | 2.3 | 2.3 | 2.3 | 1.5 |
| Heat-spalling resistance test result | | Heat spalling resistance | | Δ | Δ | Δ | Δ |
| Rotary-erosion test result | | Corrosion index | | ○ | Ⓞ | Ⓞ | Ⓞ |

In EXAMPLES 1* to 20 and REFERENCES 2 to 5, the raw materials shown in TABLES 1 to 4 were kneaded properly with water and additives, and a resultant one obtained as a result of kneading the mixture was pressure-formed by a 300-ton friction press machine, and thereby a formed body having a size of 230 × 114 × 80 mm³ was obtained. The formed body thus obtained was dried at 150°C for 24 hours and thereafter burned at 1500°C for 10 hours so as to become a sample. In REFERENCE 1, the raw materials shown in TABLE 1 were kneaded properly with water and additives, and a resultant one obtained as a result of kneading the mixture was pressure-formed by a 300-ton friction press machine, and thereby a formed body having a size of 230 × 114 × 80 mm³. The formed body thus obtained was burned at 1700°C for 10 hours so as to become a sample.

In TABLES 1 to 4, the results of evaluation of corrosion resistance to low basicity slag are shown. The test was carried out by a rotary erosion test at 1600°C for 100 hours through the use of a synthetic slag prepared to include: SiO₂ of 45 mass%; CaO of 35 mass%; Al₂O₃ of 10 mass%; Fe₂O₃ of 5 mass%; and Na₂O of 5 mass% (C/S = 0.78) as a slag. The rotational velocity was 8 rpm. The slag was exchanged every two hours. The sample after the test was cut in the middle in a longitudinal direction, and the amount of corrosion was measured. The corrosion index, having been standardized through the use of the amount of corrosion in REFERENCE 1 as 100, was calculated, and a result of calculation was evaluated. A lower corrosion index shows higher corrosion resistance. Through the use of such corrosion index, samples were evaluated through a rating corresponding to any corrosion index of: 100 to 60 as Fair (triangle); 59 to 20 as Good (single circle); and 19 to 0 as Excellent (double circle). When the corrosion index is above 100, the relevant samples were evaluated as Bad (cross). The ratings of Fair, Good, and Excellent mean *at least* that, when the material is applied to an actual machine, it could sufficiently withstand the use.

As a result of comparison with REFERENCE 1, it is found that EXAMPLE 1* including lower Al₂O₃ in relative amount, in spite of including lower Cr₂O₃ in relative amount as well, exhibits the corrosion resistance substantially equal to that of REFERENCE 1.

As a result of mutual comparison among EXAMPLES 1* to 6, it is found that, as the chromia content increases in the group, the corrosion resistance is significantly improved therein.

As a result of comparison between EXAMPLE 4 and EXAMPLE 7, it is found that the raw material applied with electro-fused chromia, which is more minute than chromia bat with an angle of repose relevant to coarse grains, is higher in corrosion resistance than the raw material applied with the chromia bat.

As a result of comparison between EXAMPLES 8* to 10* and REFERENCES 2 and 3, it is found that, in REFERENCE 2 without any aluminum phosphate added at all, the porosity is more than or equal to 20% due to insufficient sintering of the brick, and even the corrosion resistance decreases. In REFERENCE 3, the corrosion resistance is lower than that of REFERENCE 1 besides the EXAMPLES because of a higher relative amount of P₂O₅.

Between EXAMPLES 11* to 16* and REFERENCES 4 and 5, relative amounts of ZrO₂ and Al₂O₃ are different. It is found that EXAMPLES 11* to 14 and REFERENCE 4 are the same in relative amount of Cr₂O₃; however, as a relative amount of ZrO₂ or Al₂O₃ increases in the group, the corrosion resistance decreases therein. It is found that EXAMPLES 15 and 16* and REFERENCE 5 are substantially the same in relative amount of Cr₂O₃; however, as a relative amount of ZrO₂ increases in the group, the corrosion resistance decreases therein. Out of the above, it is found that the corrosion resistance of REFERENCE 5 in particular, having a relative amount of ZrO₂ above 16 mass%, is lower than even the corrosion resistance of REFERENCE 1 having a relatively low amount of Cr₂O₃. As to possible factors, as a relative amount of ZrO₂ increases in the group, the corrosion resistance decreases therein because of a large amount of micro cracks generated at the time of burning of the brick and increase of the porosity of the brick. Further, as a relative amount of Al₂O₃ increases in the group, the corrosion resistance decreases therein because of the corrosion proceeding via a reaction between Al₂O₃ and slag.

It is found that, in EXAMPLES 17* to 20*, the corrosion resistance is significantly high because no ZrO₂ is contained at all and a relative amount of Cr₂O₃ as high as 88 to 98 mass% is contained.

In TABLES 1 to 4, the results of evaluation of heat-spalling resistance test are shown. Each sample was processed into a size of 230 × 114 × 65 mm³, and a half of such a processed sample was arranged in an electric furnace at 1400°C, and a set of operation of heating for 30 minutes and thereafter air cooling was conducted in a repetitive manner. For the number of such a repetition, a set of operation was repeated until a weight defect of each sample reaches a level higher than or equal to 10% of the original weight. As the counted number of such a repetition increases, the heat spalling resistance increases. Samples were evaluated through the number of repetition corresponding to any heat spalling resistance of: twice or less as Bad (cross); 3 to 5 times as Fair (triangle); 6 to 9 times as Good (single circle); and 10 times or more as Excellent (double circle). The ratings of Fair, Good, and Excellent mean *at least* that, when the material is applied to an actual machine, it could sufficiently withstand the use.

It is found that the heat spalling resistance of the chromia-based brick was improved by the addition of aluminum phosphate, and was further improved by the addition of zirconia raw material. As a result of comparison between EXAMPLE 2 and REFERENCE 1 equal in relative amount of Cr₂O₃ to each other, EXAMPLE 2, having chromia grains bound among one another by aluminum phosphate, and having a higher relative amount of zirconia raw material added thereto, excels in heat spalling resistance. EXAMPLES 3 to 6 and EXAMPLES 17* to 20*, each having a relative amount of Cr₂O₃ is higher than that of REFERENCE 1, excel in heat spalling resistance that is improved. As a result of comparison between EXAMPLES 8* to 10* and REFERENCE 2, it is found that the heat spalling resistance is improved by the addition of aluminum phosphate, and the binding among chromia grains via aluminum phosphate is required to such a level that it could withstand thermal shock even in the bricks made at the same burning temperature.

From the results of EXAMPLES 11* to 16*, it is found that the heat spalling resistance is obtained by a lower relative amount of ZrO₂ when zirconia-mullite is used as zirconia raw material than that when the baddeleyite is used as zirconia raw material.

Further, from the results of REFERENCE 4, it is found that, when a relative amount of Al₂O₃ is above 10 mass%, the heat spalling resistance substantially equal to that of REFERENCE 1 is obtained.

As described above, it was verified that the chromia-based brick according to the present invention was a chromia-containing brick having the improved corrosion resistance while having the heat spalling resistance at a good level as well.

## Claims

1. A chromia-based brick, having chromia as a main component, comprising:
75 to 95 mass% of Cr₂O₃;
0.5 to 14 mass% of ZrO₂;
1.5 to 3.0 mass% of P₂O₅ derived from phosphate added as raw material;
8 or lower mass% of Al₂O₃; and
a sintering aid component and unavoidable components.

2. The chromia-based brick according to claim 1, wherein the phosphate includes aluminum phosphate.

3. The chromia-based brick according to any one of claim 1 or 2, wherein one or two selected from a group consisting of: zirconia-mullite having a grain diameter of 0.1 to 3 mm; and baddeleyite having a grain diameter of less than or equal to 0.074 mm, are used as the raw material of ZrO₂.

4. The chromia-based brick according to any one of claims 1 to 3, wherein a porosity is 10 to 20%.

5. The chromia-based brick according to any one of claims 1 to 4, wherein said chromia-based brick is used in a region, in which corrosion resistance is requested, in a waste-melting furnace, pig-iron equipment, gasification furnace for organic substance, and glass-melting furnace.

## Patentansprüche

1. Ziegel auf Chrom(III)-oxid-Basis, der Chrom(III)-oxid als Hauptbestandteil enthält, umfassend:
75 bis 95 Masse-% Cr₂O₃;
0,5 bis 14 Masse-% ZrO₂;
1,5 bis 3,0 Masse-% P₂O₅, das von als Rohmaterial zugegebenem Phosphat stammt;
8 oder weniger Masse-% Al₂O₃; und
einen Sinterhilfenbestandteil und unvermeidbare Bestandteile.

2. Ziegel auf Chrom(III)-oxid-Basis nach Anspruch 1, wobei das Phosphat Aluminiumphosphat umfasst.

3. Ziegel auf Chrom(III)-oxid-Basis nach einem der Ansprüche 1 oder 2, wobei eines oder zwei aus der aus Zirconiumdioxid-Mullit mit einem Korndurchmesser von 0,1 bis 3 mm und Baddeleyit mit einem Korndurchmesser von weniger als oder gleich 0,074 mm bestehenden Gruppe ausgewählte als Rohmaterial für ZrO₂ verwendet werden.

4. Ziegel auf Chrom(III)-oxid-Basis nach einem der Ansprüche 1 bis 3, wobei die Porosität 10 bis 20 % beträgt.

5. Ziegel auf Chrom(III)-oxid-Basis nach einem der Ansprüche 1 bis 4, wobei der Ziegel auf Chrom(III)-oxid-Basis in einer Region, in der Korrosionsbeständigkeit erforderlich ist, in einem Abfallschmelzofen, in einer Roheisenanlage, in einem Vergasungsofen für organische Stoffe und in einem Glasschmelzofen verwendet wird.

## Revendications

1. Brique à base d'oxyde de chrome, ayant l'oxyde de chrome comme composant principal, comprenant :
de 75 à 0,50 % en masse, Cr₂O₃ :
de 0,5 à 14 % en masse de ZrO₂ ;
de 1,5 à 3,0 % en masse de P₂O₅ dérivé de phosphate ajouté comme matière première ;
8 % en masse ou moins d'Al₂O₃ ; et
un composant d'aide au frittage et des composants inévitables.

2. Brique à base d'oxyde de chrome selon la revendication 1, dans laquelle le phosphate comprend du phosphate d'aluminium.

3. Brique à base d'oxyde de chrome selon l'une quelconque des revendications 1 ou 2, dans laquelle une ou deux choisies dans un groupe constitué de : zircone-mullite présentant un diamètre de grain de 0,1 à 3 mm ; et baddeleyite présentant un diamètre de grain inférieur ou égal à 0,074 mm, sont utilisées comme matière première de ZrO₂.

4. Procédé selon l'une quelconque des revendications 1 à 3, dans lequel une porosité est de 10 à 20%.

5. Brique à base d'oxyde de chrome selon l'une quelconque des revendications 1 à 4, dans laquelle ladite brique à base d'oxyde de chrome est utilisée dans une région dans laquelle une résistance à la corrosion est requise, dans un four de fusion de déchets, un équipement en fonte, un four de gazéification pour une substance organique et un four de fusion de verre.
